# EUROPEAN PATENT SPECIFICATION

(11) **EP 0 999 656 B1**
(45) Date of publication and mention of the grant of the patent: **27.09.2006**
(21) Application number: 99121351.3
(22) Date of filing: 26.10.1999
(51) Int. Cl.: H04B 7/005

(54) **Cellular mobile communication system comprising multicast channel**
Zellulares Mobilkommunikationssystem mit Mehrfachsendekanal
Système de communication mobile avec un canal à diffusion multiple

(30) Priority: 30.10.1998 JP 31004898
(43) Date of publication of application: 10.05.2000
(73) Proprietor: NEC CORPORATION, Tokyo (JP)
(72) Inventor: Mochizuki, Takashi, Minato-ku, Tokyo (JP); Furuya, Yukitsuna, Minato-ku, Tokyo (JP)
(74) Representative: von Samson-Himmelstjerna, Friedrich

(56) References cited:
- WO-A-97/47094

## Description

### BACKGROUND OF THE INVENTION

### Field of the Invention:

The present invention relates to a cellular mobile communication system and in particular, to the cellular mobile communication system which uses a code division multiple access system (CDMA system).

### Description of the Prior Art:

In a mobile communication system, especially in a cellular mobile communication system, there is defined an individual channel which each mobile terminal uses and a common channel which all the mobile terminals use for receiving, for example, control information transmitted from a base station. On the contrary, there has not been defined a multicast channel which not all the users but plural users use. Therefore, in order to provide a multicast service in a cellular system, it is necessary either to transmit information to all the destination mobile terminals individually or to execute a broadcast communication using a common channel which is common to all the users. Both of the alternatives are not effective.

On the other hand, in MCA system and the like, a multicast channel is defined and mobile terminals which belong to the same organization can obtain the same information with a single channel. However, this is used in a large-zone system which a single base station constitutes. It is not possible to apply this system to a cellular system in which each mobile terminal moves across cells. In a cellular system, because each mobile terminal moves, it is necessary to control whether to set a multicast channel in each cell. A first object of the present invention is to provide a this control function.

On the other hand, a second object of the present invention is to provide a multicast communication system in which a multicast message is transmitted with the minimum necessary transmission power and thereby decreasing interferences to mobile terminals which do not receive the multicast message.

That is, as a multicast communication system for mobile communications, there is proposed a system disclosed in JP, 1-270422, A. In this system, a mobile terminal has a single communication mode, enters into the single communication mode when transmitting and receiving a multicast message, and halts a transmission from the mobile terminal when receiving a multicast message. This is not sufficient to decrease interferences to mobile terminals which do not receive a multicast message. In this system, because there is no means to control a transmission power from a base station, the base station transmits with a transmission power which becomes a sufficient reception power for a mobile terminal which locates at a periphery of a service area of the base satation, and accordingly, if mobile terminals which receive a multicast message exist only in the vicinity of the base station, an excessive interference signal is given to mobile terminals which do not receive the multicast message in the area.

WO 97/47094 disclosed a communications system having the features defined in the generic portions of the independent claims.

### SUMMARY OF THE INVENTION

In order to overcome the aforementioned disadvantages and attain the above objects, the present invention has been made.

According to the present invention, there is provided a multicast communication system comprising: a base station which transmits a multicast message to a single communication channel; and plural mobile terminals which receive the multicast message on the single communication channel; wherein each of the mobile terminals comprises: a receiver for receiving the multicast message; a measurer for measuring a reception power of the multicast message and judging whether or not the reception power is sufficient; a first transmitter for transmitting a transmission-power-increment-requesting-signal for requesting the base station to increase a transmission power of the multicast message; and a switch for enabling transmission of the transmission-power-increment-requesting-signal to the base station when it is determined that the reception power of the multicast message is not sufficient; wherein the base station comprises: a second transmitter for transmitting the multicast message; a transmission power controller for controlling the transmission power of the multicast message transmitted from the second transmitter; and a receiver for receiving the transmission-power-increment-requesting-signal which the mobile terminal has transmitted; wherein the transmission power controller increases the transmission power of the multicast message when the base station receives the transmission-power-increment-requesting-signal; and wherein the transmission power controller of the base station is adapted to gradually decrease the transmission power of the multicast message when the base station does not receive the transmission-power-increment-requesting-signal, wherein the first transmitter of the mobile terminal is adapted to gradually increase a transmission power of the transmission-power-increment-requesting-signal as long as the reception power of the multicast message doesn't increase even after transmitting the transmission-power-increment-requesting-signal.

In the cellular mobile communication system, all mobile terminals may use a common signal of a common communication channel as the transmission-power-increment-requesting-signal when requesting said base station to increase the transmission power of the multicast message.

According to the present invention, there is also provided a method for multicasting a multicast message from a base station to plural mobile terminals through a single communication channel in a cellular mobile communication system, the method comprising: a first step in which the base station transmits the multicast message; a second step in which each mobile terminal receives the multicast message; a third step in which each mobile terminal measures a reception power of the multicast message and judges whether or not the reception power is sufficient; a fourth step in which each mobile terminal transmits a transmission-power-increment-requesting-signal for requesting the base station to increase a transmission power of the multicast message when it is determined that the reception power of the multicast message is not sufficient; a fifth step in which the base station receives the transmission-power-increment-requesting-signal which each mobile terminal has transmitted; a sixth step in which the base station increases a transmission power of the multicast message when the base station receives the transmission-power-increment-requesting-signal; and a seventh step in which the base station gradually decreases the transmission power of the multicast message when the base station does not receive the transmission-power-increment-requesting-signal; and an eighth step in which the mobile terminal gradually increases a transmission power of the transmission-power-increment-requesting-signal as long as the reception power of the multicast message doesn't increase even after transmitting the transmission-power-increment-requesting-signal.

The mobile terminal transmits the transmission-power-increment-requesting signal when the reception power of the multicast message is insufficient, while not transmits the transmission-power-increment-requesting signal when the reception power is sufficient in strength. The base station increases the transmission power when receiving the transmission-power-increment-requesting signal, while gradually decreases the transmission power when not receiving the transmission-power-increment-requesting signal. That is, it is realized that a mobile terminal, which locates remotely from the base station transmits the transmission-power-increment-requesting signal when the transmission power is insufficient and accordingly the base station increases the transmission power, while a mobile terminal for which the reception power is sufficiently high does not transmit the transmission-power-increment-requesting signal. As a result, it is realized that the transmission power from the base station is controlled so that the transmission power becomes the minimum necessary reception power for the mobile terminal which locates farthest from the base station and accordingly an interference to a mobile terminal which locates in the service area of the base station and does not receive the multicast message is minimized.

These and other objects, features and advantages of the present invention will become more apparent in the light of the following detailed description of the best mode embodiments thereof, as illustrated in the accompanying drawings.

### BRIEF DESCRIPTION OF THE DRAWINGS

FIGs. 1A and 1B are conceptual picture to explain the operation of a multicast service according to a first embodiment of the present invention;
FIG. 2 is a sequence diagram showing a control procedure of the multicast service according to the first embodiment of the present invention;
FIG. 3A is a block diagram showing a structure of a base station of a multicast communication system according to a second embodiment of the present invention;
FIG. 3B is a block diagram showing a structure of a mobile terminal of the multicast communication system according to the second embodiment of the present invention;
FIG. 4 is a conceptual picture to explain an operation of a multicast communication system comprising the base station and mobile terminals shown in FIG. 3 according to the second embodiment of the present invention;
FIG. 5 is a diagram to explain a manner in which a transmission power of a multicast channel converges according to the second embodiment of the present invention; and
FIG. 6 is a diagram to explain another manner in which a transmission power of a multicast channel converges according to the second embodiment of the present invention.

### DETAILED DESCRIPTION OF THE PREFERRED EMBODIMENT

Preferred embodiments of the present invention will be described hereunder with reference to the accompanying drawings.

### [a first embodiment]

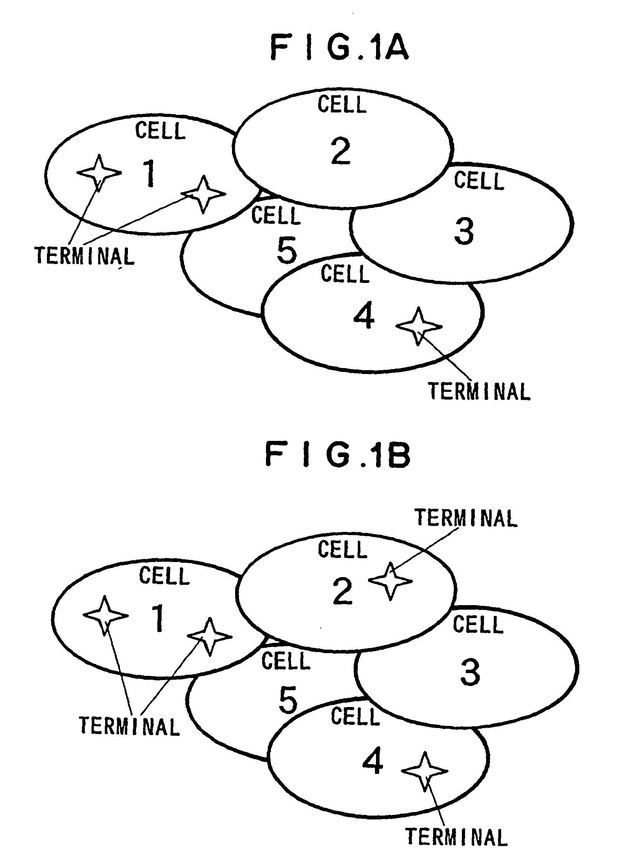

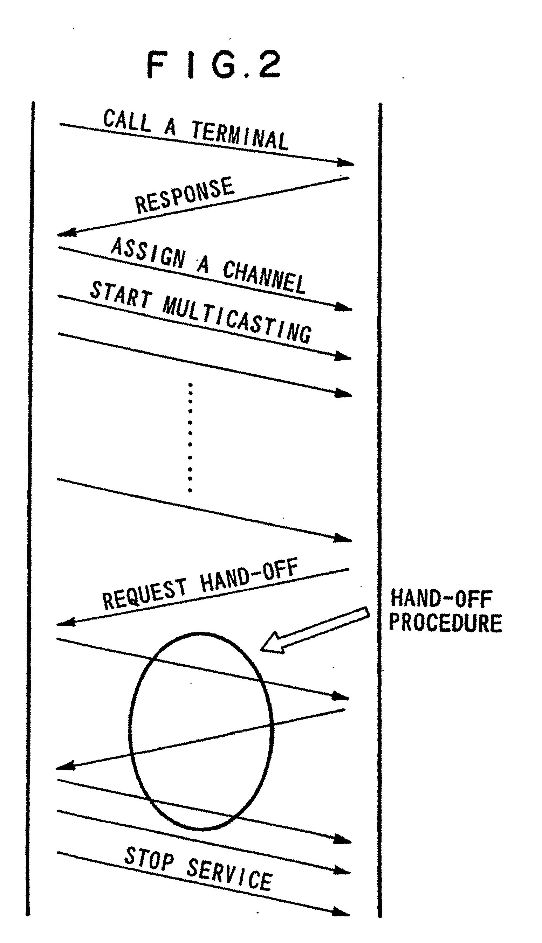

Referring to FIGs. 1 and 2, reference numerals 1, 2, 3, 4, and 5 stand for cells different from one another, and start marks stands for the locations of the mobile terminals which receive a multicast service. As shown in FIG. 1A, when the mobile terminals locate in cells 1 and 4, multicast channels are established in these cells and a multicast service is started. Afterward, as shown in FIG. 1B, one mobile terminal which have been located in cell 1 moves to cell 2 while the service is provided, and therefore, multicast channel information needs to be transmitted in cell 2 in addition to cells 1 and 4. As a procedure for switching cells subjected to a multicast transmission, a procedure of the hand-off which is well-known heretofore is used.

FIG. 2 shows the control procedure of a multicast service of the first embodiment. When a request for a multicast service arises, the system side determines the cell to be subjected to the multicast transmission depending on the cell from which a response is returned when the objective mobile terminal is called. The mobile terminal transmits a hand-off request to a base station when the mobile terminal moves from a cell to another cell while receiving a multicast transmission signal. If a new base station which receives the hand-off request is a base station which already has established the multicast service, the network side notifies the mobile terminal of the channel number of the multicast service in a service area of the base station. In order to simplify this procedure, it may be considered that the channel number for a multicast transmission is common among base stations.

If the new base station has not established a multicast service, the new base station establishes a new multicast channel. Similarly, a base station which comes to have no mobile terminals receiving a multicast service because of the movements of mobile terminals releases the multicast channel for the service. When the service is finished, all the multicast channels are released.

### [a second embodiment]

In general, a transmission power control for controlling a transmission power from a base station depending on the reception state of each mobile terminals is executed in a CDMA system. However, in a multicast channel, it is not possible to control a transmission power depending on the reception state of each mobile terminal because plural mobile terminals execute reception under different conditions. Therefore, it is necessary to perform transmission with a power which is sufficiently strong to reach the periphery of a service area without performing a transmission power control, or alternatively to adopt a method for controlling a transmission power which is specific to a multicast channel.

On the basis of this demand, a multicast communication system according of the second embodiment which corresponds to the second object of the present invention will be explained hereunder.

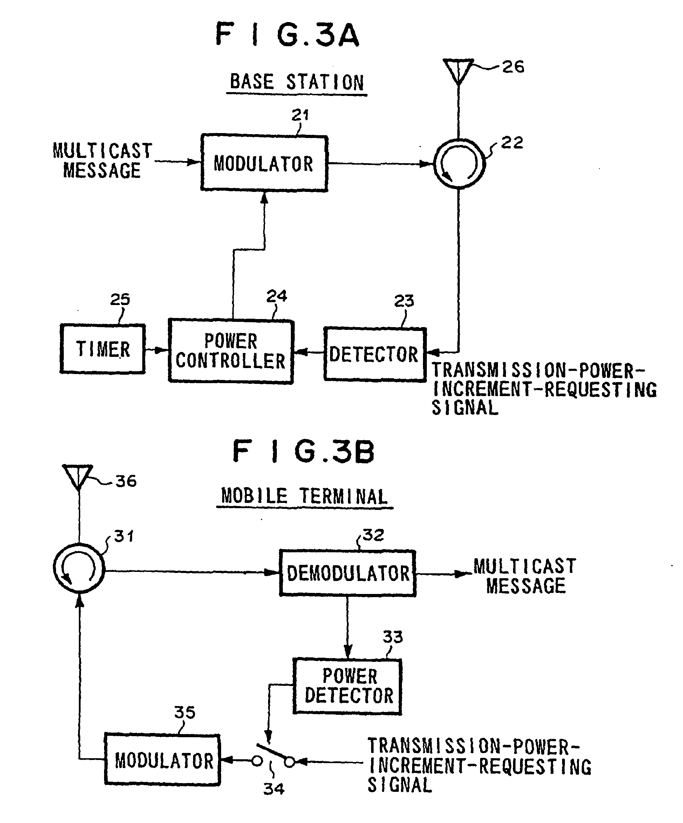

Referring to FIG. 3A, a base station of the multicast communication system according to the second embodiment comprises modulator 21 which modulates a multicast message, transmission power controller 24 which controls a gain of modulator 21, detector 23 which detects a transmission-power-increment-requesting signal from each mobile terminal, timer 25 which ticks a time, circulator 22 which supplies an output signal from modulator 21 to antenna 26 and supplies a signal received by antenna 26 to detector 23, and antenna 26 which receives and transmits radio waves.

Referring to FIG. 3B, a mobile terminal of the multicast communication system according to the second embodiment comprises demodulator 32 which demodulates a multicast message, power measurer 33 which measures the reception power of the multicast message, switch 34 which turns ON/OFF the transmission of a transmission-power-increment-requesting signal, modulator 35 which modulates an output signal of switch 34 to a radio signal, circulator 31 which supplies an output signal of modulator 35 to antenna 36 and supplies a signal received by antenna 36 to modulator 32, and antenna 36 which receives and transmits radio waves.

In FIGs. 3A and 3B, modulators 21, 35, demodulator 32, and detector 23 are devices which transmit and receive signals in a radio region by a CDMA system, well known to those skilled in the art, and not directly related to the present invention. Therefore, the detailed description of these are omitted.

Hereinafter, the operation of this embodiment will be explained.

Power measurer 33 of the mobile terminal measures the reception power of a multicast message which demodulator 32 has demodulated, compares the reception power with a prescribed threshold, and when the reception power is lower than the threshold, turns switch 34 ON to transmit the transmission-power-increment-requesting signal. When the reception power is higher than the threshold, power measurer 33 turns OFF switch 34 not to transmit the transmission-power-increment-requesting signal.

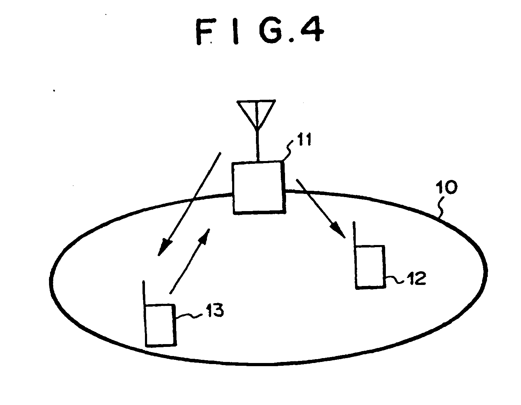

Referring to FIG. 4, terminal 12 which locates close to base station 11 does not transmits the transmission-power-increment-requesting signal. On the contrary, terminal 13 which locates remotely from base station 11 transmits the transmission-power-increment-requesting signal to base station 11.

All the mobile terminals may transmit the same signal as the transmission-power-increment-requesting signal using a common communication channel when they transmit the transmission-power-increment-requesting signal. In such a case, detector 23 of the base station has only to monitor one signal on one communication channel with respect to detecting the transmission-power-increment-requesting signal.

In a case where the reception power does not increase notwithstanding that a mobile terminal has transmitted the transmission-power-increment-requesting signal, the mobile terminal transmits the transmission-power-increment-requesting signal while increasing the transmission power of the transmission-power-increment-requesting-signal because such a case is usually caused when the transmission-power-increment-requesting signal is not received by the base station due to insufficiency of the power of the transmission-power-increment-requesting signal. As to a form of the transmission-power-increment-requesting signal, for example, it is suitable to divide a transmission channel for the transmission-power-increment-requesting signal into a series of a time slices and to insert a certain bit pattern (for example, "11") in a certain time position of each slice.

Transmission power controller 24 of the base station have modulator 21 increase the value of the transmission power of a multicast message by a certain value if detector 23 detects the transmission-power-increment-requesting signal. If detector 23 does not detect the transmission-power-increment-requesting signal, transmission power controller 24 have modulator 21 gradually decrease the transmission power of the multicast message in response to a tick signal from timer 25. In order to prevent detector 23 from detecting the transmission-power-increment-requesting signal by mistake, it may be allowed to compare the power of the transmission-power-increment-requesting signal with a threshold to judge whether to have received the transmission-power-increment-requesting signal.

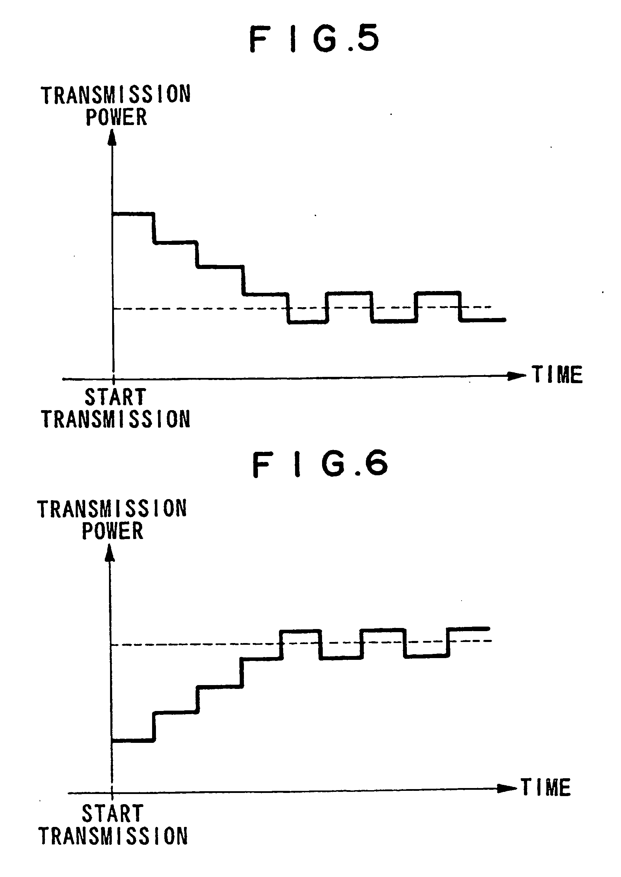

As a result of the aforementioned operation, the transmission power of a multicast message transmitted from the base station converges to a certain value as shown in FIG. 5 or FIG. 6. This value is the minimum necessary value for the mobile terminal which locates farthest from the base station to receive the multicast message.

In a case where the transmission power of a multicast message is relatively high at the beginning of the transmission of the multicast message as shown in FIG. 5, no mobile terminal does transmit a transmission-power-increment-requesting signal for the first time, but as the transmission power of the multicast message decreases, the remotest mobile terminal first transmits a transmission-power-increment-requesting signal and thereafter transmits the transmission-power-increment-requesting signal intermittently, whereby the transmission power of the multicast message is kept at a minimum necessary value after convergence.

On the contrary, in a case where the transmission power of a multicast message is relatively low at the beginning of the transmission of the multicast message as shown in FIG. 6, almost all the mobile terminal transmit transmission-power-increment-requesting signals for the first time, but as the transmission power of the multicast message increases, the number of the mobile terminals which return the transmission-power-increment-requesting signals decreases and the remotest mobile terminal transmits the transmission-power-increment-requesting signal intermittently to the last, whereby the transmission power of the multicast message is kept at a minimum necessary value after convergence.

Even when the minimum necessary transmission power varies because of movements of mobile terminals or variation of transmission conditions of a radio wave, or even when the mobile terminal which necessitates the highest transmission power switches from one to another , it is possible to automatically control the minimum necessary transmission power.

As explained above, it is necessary to control whether to establish a multicast channel in each cell in connection with multicast communication in a cellular mobile communication system because each of mobile terminals moves from one cell to another in the cellular mobile communication system, In order to cope with such necessity, according to the present invention, when there is a multicast service request, a system side performs a control so that the system side calls an objective mobile terminal to determine a cell to be subjected to the multicast depending on which cell a response comes from, assigns a channel in each determined cell, and starts a multicast when the assignment has completed. Therefore, the following effect is brought. First, a common channel is not used for a multicast communication. Second, it is not necessary to transmit information to objective mobile terminals individually. Third, a multicast channel function which plural users use can be realized.

In addition, according to the present invention, on the basis of the basic structure in which a mobile terminal comprises means for transmitting a transmission-power-increment-requesting signal only in a case where the reception power of a multicast message is insufficient, and a base station comprises means for increasing the transmission power of the broadcast message when receiving the transmission-power-increment-requesting signal from the mobile terminal, there is provided a multicast communication system that decreases interferences to mobile terminals which do not receive the multicast message.

In the above, cases where only a multicast communication is established was explained, but the present invention may be applied to a case where a communication between a base station and each mobile terminal coexists with a multicast communication in a cellular mobile communication system.

## Claims

1. A multicast communication system comprising:
a base station (Fig. 3A; 11) adapted to transmit a multicast message to a single communication channel; and
plural mobile terminals (Fig. 3B; 12, 13) adapted to receive said multicast message on said single communication channel;
wherein each of said mobile terminals (Fig. 3B; 12, 13) comprises: a receiver (31, 32, 36) for receiving said multicast message; a measurer (33) for measuring the reception power of said multicast message and judging whether or not said reception power is sufficient; a first transmitter (31, 35, 36) for transmitting a transmission-power-increment-requesting-signal for requesting said base station (Fig. 3A; 11) to increase the transmission power of said multicast message; and a switch (34) for enabling transmission of said transmission-power-incrementrequesting-signal to said base station (Fig. 3A; 11) when said reception power of said multicast message is not sufficient;
wherein said base station (Fig. 3A; 11) comprises: a second transmitter (21, 22, 26) for transmitting said multicast message; a transmission power controller (24) for controlling said transmission power of said multicast message transmitted from said second transmitter (21, 22, 26); and a receiver (22, 23, 26) for receiving said transmission-power-increment-requesting-signal which said mobile terminal (Fig. 3B; 12, 13) has transmitted;
wherein said transmission power controller (24) is adapted to increase said transmission power of said multicast message when said base station (Fig. 3A; 11) receives said transmission-power-increment-requesting-signal; and
wherein said transmission power controller (24) of said base station (Fig. 3A; 11) is adapted to gradually decrease said transmission power of said multicast message when said base station (Fig. 3A; 11) does not receive said transmission-power-increment-requesting-signal;
**characterized in that**
said first transmitter (31, 35, 36) of said mobile terminal (Fig. 3B; 12, 13) is adapted to gradually increase a transmission power of said transmission-power-increment-requesting-signal as long as said reception power of said multicast message doesn't increase even after transmitting said transmission-power-increment-requesting-signal.

2. The multicast communication system as claimed in claim 1, wherein
all mobile terminals (Fig. 3B; 12, 13) are adapted to use a common signal of a common communication channel as said transmission-power-increment-requesting-signal when requesting said base station to increase the transmission power of said multicast message

3. A method for multicasting a multicast message from a base station (Fig. 3A; 11) to plural mobile terminals (Fig. 3B; 12, 13) through a single communication channel in a cellular mobile communication system, said method comprising:
a first step in which said base station (Fig. 3A; 11) transmits said multicast message;
a second step in which each mobile terminal (Fig. 3B; 12, 13) receives said multicast message;
a third step in which said each mobile terminal (Fig. 3B; 12, 13) measures a reception power of said multicast message and judges whether or not said reception power is sufficient;
a fourth step in which said each mobile terminal (Fig. 3B; 12, 13) transmits a transmission-power-increment-requesting-signal for requesting said base station (Fig. 3A; 11) to increase a transmission power of said multicast message when it is determined that said reception power of said multicast message is not sufficient;
a fifth step in which said base station (Fig. 3A; 11) receives said transmission-power-increment-requesting-signal which said each mobile terminal (Fig. 3B; 12, 13) has transmitted;
a sixth step in which said base station (Fig. 3A; 11) increases a transmission power of said multicast message when said base station (Fig. 3A; 11) receives said transmission-power-increment-requesting-signal; and
a seventh step in which said base station (Fig. 3A; 11) gradually decreases said transmission power of said multicast message when said base station (Fig. 3A; 11) does not receive said transmission-power-increment-requesting-signal;
**characterized by** further comprising:
a eighth step in which said mobile terminal (Fig. 3B; 12, 13) gradually increases a transmission power of said transmission-power-increment-requesting-signal as long as said reception power of said multicast message doesn't increase even after transmitting said transmission-power-increment-requesting-signal.

## Patentansprüche

1. Multicast-Kommunikationssystem, mit:
einer Basisstation (Fig. 3A; 11), die ausgelegt ist, eine Multicast-Nachricht zu einem einzelnen Kommunikationskanal zu übertragen; und
mehreren mobilen Endgeräten (Fig. 3B; 12, 13), die ausgelegt sind, die Multicast-Nachricht auf dem einzelnen Kommunikationskanal zu empfangen;
wobei jedes der mobilen Endgeräte (Fig. 3B; 12, 13) umfasst: einen Empfänger (31, 32, 36) zum Empfangen der Multicast-Nachricht; eine Messeinrichtung (33) zum Messen der Empfangsleistung der Multicast-Nachricht und zum Beurteilen, ob die Empfangsleistung ausreichend ist oder nicht; einen ersten Sender (31, 35, 36) zum Übertragen eines Übertragungsleistungs-Erhöhungs-Anforderungs-Signals, um die Basisstation (Fig. 3A, 11) aufzufordern, die Übertragungsleistung der Multicast-Nachricht zu erhöhen; und einen Schalter (34), um die Übertragung des Übertragungsleistungs-Erhöhungs-Anforderungs-Signals zu der Basisstation (Fig. 3A; 11) freizugeben, wenn die Empfangsleistung der Multicast-Nachricht nicht ausreichend ist;
wobei die Basisstation (Fig. 3A; 11) umfasst: einen zweiten Sender (21, 22, 26) zum Übertragen der Multicast-Nachricht; eine Übertragungsleistungssteuereinrichtung (24) zum Steuern der Übertragungsleistung der von dem zweiten Sender (21, 22, 26) übertragenen Multicast-Nachricht; und einen Empfänger (22, 23, 26) zum Empfangen des Übertragungsleistungs-Erhöhungs-Anforderungs-Signals, das das mobile Endgerät (Fig. 3B; 12, 13) übertragen hat;
wobei die Übertragungsleistungssteuereinrichtung (24) ausgelegt ist, die Übertragungsleistung der Multicast-Nachricht zu erhöhen, wenn die Basisstation (Fig. 3A; 11) das Übertragungsleistungs-Erhöhungs-Anforderungs-Signal empfängt; und
wobei die Übertragungsleistungssteuereinrichtung (24) der Basisstation (Fig. 3A; 11) ausgelegt ist, die Übertragungsleistung der Multicast-Nachricht graduell zu verringern, wenn die Basisstation (Fig. 3A; 11) das Übertragungsleistungs-Erhöhungs-Anforderungs-Signal nicht empfängt;
**dadurch gekennzeichnet, dass**
der erste Sender (31, 35, 36) des mobilen Endgeräts (Fig. 3B; 12, 13) ausgelegt ist, eine Übertragungsleistung des Übertragungsleistungs- Erhöhungs-Anforderungs-Signals graduell zu erhöhen, solange die Empfangsleistung der Multicast-Nachricht auch nach einer Übertragung des Übertragungsleistungs-Erhöhungs-Anforderungs-Signals nicht ansteigt.

2. Multicast-Kommunikationssystem nach Anspruch 1, bei dem
alle mobilen Endgeräte (Fig. 3B; 12, 13) ausgelegt sind, ein gemeinsames Signal eines gemeinsamen Kommunikationskanals als das Übertragungsleistungs-Erhöhungs-Anforderungs-Signal zu verwenden, wenn die Basisstation aufgefordert wird, die Übertragungsleistung der Multicast-Nachricht zu erhöhen.

3. Verfahren zum Übertragen einer Multicast-Nachricht per Multicast ausgehend von einer Basisstation (Fig. 3A; 11) zu mehreren mobilen Endgeräten (Fig. 3B; 12, 13) über einen einzelnen Kommunikationskanal in einem zellulären mobilen Kommunikationssystem, wobei das Verfahren umfasst:
einen ersten Schritt, in dem die Basisstation (Fig. 3A; 11) die Multicast-Nachricht überträgt;
einen zweiten Schritt, in dem jedes mobile Endgerät (Fig. 3B; 12, 13) die Multicast-Nachricht empfängt;
einen dritten Schritt, in dem jedes mobile Endgerät (Fig. 3B; 12, 13) eine Empfangsleistung der Multicast-Nachricht misst und überprüft, ob die Empfangsleistung ausreichend ist oder nicht;
einen vierten Schritt, in dem jedes mobile Endgerät (Fig. 3B; 12, 13) ein Übertragungsleistungs-Erhöhungs-Anforderungs-Signal überträgt, um die Basisstation (Fig. 3A; 11) aufzufordern, eine Übertragungsleistung der Multicast-Nachricht zu erhöhen, wenn festgestellt wird, dass die Empfangsleistung der Multicast-Nachricht nicht ausreichend ist;
einen fünften Schritt, in dem die Basisstation (Fig. 3A; 11) das Übertragungsleistungs-Erhöhungs-Anforderungs-Signal empfängt, das jedes mobile Endgerät (Fig. 3B; 12, 13) übertragen hat;
einen sechsten Schritt, in dem die Basisstation (Fig. 3A; 11) eine Übertragungsleistung der Multicast-Nachricht erhöht, wenn die Basisstation (Fig. 3A; 11) das Übertragungsleistungs-Erhöhungs-Anforderungs-Signal empfängt; und
einen siebten Schritt, in dem die Basisstation (Fig. 3A; 11) allmählich die Übertragungsleistung der Multicast-Nachricht verringert, wenn die Basisstation (Fig. 3A; 11) das Übertragungsleistungs-Erhöhungs-Anforderungs-Signal nicht empfängt;
**dadurch gekennzeichnet, dass** es ferner umfasst:
einen achten Schritt, in dem das mobile Endgerät (Fig. 3B; 12, 13) eine Übertragungsleistung des Übertragungsleistungs-Erhöhungs-Anforderungs-Signals allmählich erhöht, solange die Empfangsleistung der Multicast-Nachricht auch nach einer Übertragung des Übertragungsleistungs-Erhöhungs-Anforderungs-Signals nicht ansteigt.

## Revendications

1. Système de communication à diffusion multiple comprenant :
une station de base (Fig. 3A ; 11) adaptée pour transmettre un message de diffusion multiple sur un canal de communication unique ; et
plusieurs terminaux mobiles (Fig. 3B ; 12, 13) adaptés pour recevoir ledit message de diffusion multiple sur ledit canal de communication unique ;
dans lequel chacun desdits terminaux mobiles (Fig. 3B ; 12, 13) comprend : un récepteur (31, 32, 36) pour recevoir ledit message de diffusion multiple ; un dispositif de mesure (33) pour mesurer la puissance de réception dudit message de diffusion multiple et juger si ladite puissance de réception est ou non suffisante ; un premier émetteur (31, 35, 36) pour transmettre un signal de demande d'augmentation de puissance d'émission pour demander à ladite station de base (Fig. 3A ; 11) d'augmenter la puissance d'émission dudit message de diffusion multiple ; et un commutateur (34) pour valider la transmission dudit signal de demande d'augmentation de puissance d'émission à ladite station de base (Fig. 3A ; 11) quand ladite puissance de réception dudit message de diffusion multiple n'est pas suffisante ;
dans lequel ladite station de base (Fig. 3A ; 11) comprend : un deuxième émetteur (21, 22, 26) pour transmettre ledit message de diffusion multiple ; un dispositif de commande de puissance d'émission (24) pour commander ladite puissance d'émission dudit message de diffusion multiple transmis à partir dudit deuxième émetteur (21, 22, 26) ; et un récepteur (22, 23, 26) pour recevoir ledit signal de demande d'augmentation de puissance d'émission que ledit terminal mobile (Fig. 3B ; 12, 13) a transmis ;
dans lequel ledit dispositif de commande de puissance d'émission (24) est adapté pour augmenter ladite puissance d'émission dudit message de diffusion multiple quand ladite station de base (Fig. 3A ; 11) reçoit ledit signal de demande d'augmentation de puissance d'émission ; et
dans lequel ledit dispositif de commande de puissance d'émission (24) de ladite station de base (Fig. 3A ; 11) est adapté pour diminuer progressivement ladite puissance d'émission dudit message de diffusion multiple quand ladite station de base (Fig. 3A ; 11) ne reçoit pas ledit signal de demande d'augmentation de puissance d'émission ;
**caractérisé en ce que**
ledit premier émetteur (31, 35, 36) dudit terminal mobile (Fig. 3B ; 12, 13) est adapté pour augmenter progressivement une puissance d'émission dudit signal de demande d'augmentation de puissance d'émission aussi longtemps que ladite puissance d'émission dudit message de diffusion multiple n'augmente pas même après transmission dudit signal de demande d'augmentation de puissance d'émission.

2. Système de communication à diffusion multiple la revendication 1, dans lequel
tous les terminaux mobiles (Fig. 3B ; 12, 13) sont adaptés pour utiliser un signal commun d'un canal de communication commun comme ledit signal de demande d'augmentation de puissance d'émission quand ladite station de base augmente la puissance d'émission dudit message de diffusion multiple.

3. Procédé de diffusion multiple d'un message de diffusion multiple d'une station de base (Fig. 3A ; 11) à plusieurs terminaux mobiles (Fig. 3B ; 12, 13) à travers un canal de communication unique dans un système de communication mobile cellulaire, ledit procédé comprenant :
une première étape dans laquelle ladite station de base (Fig. 3A ; 11) transmet ledit message de diffusion multiple ;
une deuxième étape dans laquelle chaque terminal mobile (Fig. 3B ; 12, 13) reçoit ledit message de diffusion multiple ;
une troisième étape dans laquelle chaque dit terminal mobile (Fig. 3B ; 12, 13) mesure une puissance de réception dudit message de diffusion multiple et juge si ladite puissance de réception est ou non suffisante ;
une quatrième étape dans laquelle chaque dit terminal mobile (Fig. 3B ; 12, 13) transmet un signal de demande d'augmentation de puissance d'émission pour demander à ladite station de base (Fig. 3A ; 11) d'augmenter la puissance d'émission dudit message de diffusion multiple quand il est déterminé que ladite puissance de réception dudit message de diffusion multiple n'est pas suffisante ;
une cinquième étape dans laquelle ladite station de base (Fig. 3A ; 11) reçoit ledit signal de demande d'augmentation de puissance d'émission que ledit chaque terminal mobile (Fig. 3B ; 12, 13) a transmis ;
une sixième étape dans laquelle ladite station de base (Fig. 3A ; 11) augmente ladite puissance d'émission dudit message de diffusion multiple quand ladite station de base (Fig. 3A ; 11) reçoit ledit signal de demande d'augmentation de puissance d'émission ; et
une septième étape dans laquelle ladite station de base (Fig. 3A ; 11) diminue progressivement ladite puissance d'émission dudit message de diffusion multiple quand ladite station de base (Fig. 3A ; 11) ne reçoit pas ledit signal de demande d'augmentation de puissance d'émission ;
**caractérisé en ce qu'**il comprend en outre :
une huitième étape dans laquelle ledit terminal mobile (Fig. 3B ; 12, 13) augmente progressivement une puissance d'émission dudit signal de demande d'augmentation de puissance d'émission aussi longtemps que ladite puissance d'émission dudit message de diffusion multiple n'augmente pas même après transmission dudit signal de demande d'augmentation de puissance d'émission.
